# EUROPÄISCHE PATENTSCHRIFT

(11) **EP 4 441 485 B1**
(45) Veröffentlichungstag und Bekanntmachung des Hinweises auf die Patenterteilung: **29.10.2025**
(21) Anmeldenummer: 22812415.2
(22) Anmeldetag: 11.11.2022
(51) Int. Cl.: G01N 1/22, G01N 25/68, B01D 46/24

(54) **VERFAHREN ZUR BESTIMMUNG DER ABSOLUTEN FEUCHTE UND VORRICHTUNG ZUR DURCHFÜHRUNG DES VERFAHRENS**
METHOD FOR DETERMINING THE ABSOLUTE HUMIDITY AND DEVICE FOR CARRYING OUT THE METHOD
PROCÉDÉ DE DÉTERMINATION D'HUMIDITÉ ABSOLUE ET DISPOSITIF DE MISE EN OEUVRE DU PROCÉDÉ

(30) Priorität: 30.11.2021 DE 102021131434
(43) Veröffentlichungstag der Anmeldung: 09.10.2024
(73) Patentinhaber: ATEX EXPLOSIONSSCHUTZ GMBH, 59519 Möhnesee (DE)
(72) Erfinder: ALFERT, Franz, 59519 Möhnesee (DE)
(74) Vertreter: Griepenstroh, Jörg
(86) Internationale Anmeldenummer: PCT/DE2022/100842
(87) Internationale Veröffentlichungsnummer: WO 2023/098938

(56) Entgegenhaltungen:
- CN-U- 213 912 735
- CN-Y- 201 392 284
- JP-A- H0 980 005

## Beschreibung

Die Erfindung betrifft ein Verfahren zur Bestimmung der absoluten Feuchte einer Gasprobe eines Prozessgases gemäß den Merkmalen im Oberbegriff des Patentanspruchs 1. Die Erfindung betrifft ferner eine Vorrichtung zur Durchführung des Verfahrens gemäß den Merkmalen des Patentanspruchs 6.

Die Messung der absoluten Feuchte eines Prozessgases ist ein wichtiger Wert für die Steuerung von Prozessen, insbesondere bei der Sprühtrocknung. Die Sprühtrocknung gehört zu denjenigen Verarbeitungsverfahren, die den höchsten Energieeinsatz erfordern. Die Qualität des Ergebnisses, beispielsweise von getrocknetem Milchpulver, ist unter anderem durch den Restfeuchtegehalt gekennzeichnet. Eine Herausforderung bei der Steuerung eines Sprühtrockners besteht darin, mit einem Minimum an Energie (Heißluft) die Restfeuchte im Pulver zu kontrollieren und zu vermeiden, dass das Pulver an den Wänden der Kammer anhaftet. Eine gleichbleibende Restfeuchte einzustellen ist nicht einfach, da der Betrieb eines Sprühtrockners kontinuierlich an die Schwankungen der Zulaufkonzentration und der Umgebungsluftfeuchtigkeit angepasst werden muss. Ein unzulässiger Feuchtigkeitsgehalt beeinflusst nicht nur die physikalischen Eigenschaften und die Haltbarkeit des Produkts, sondern auch den Verarbeitungsprozess. Durch Verkleben kommt es zu Produktverlust und zu einem erhöhten Reinigungsaufwand, was wieder Zeit und Energie kostet. Um den Trocknungsprozess durch die Regelung des Restfeuchtegehaltes zu optimieren, benötigt der Betreiber schnelle, genaue und kontinuierliche Messungen. In der Praxis wird die Restfeuchte im Pulver durch ein- bis zweistündige Offline-Messungen an Produktproben bestimmt, wobei die Zeit zwischen Messung und Reaktion sehr lang ist. Teilweise werden auch Sensoren zur Messung der relativen Feuchte in der Abluft eingesetzt. Sie dienen der Online-Rückmeldung bei der Änderung der Prozesssteuerungsparameter. Diese Sensoren sind sehr anfällig für Produktansammlungen, erfordern eine regelmäßige Kalibrierung und zeigen Ungenauigkeiten aufgrund von Drift und Verzögerungen (Hysterese). Um Produktansammlungen zu vermeiden, werden sie oft hinter den Abluftfiltern platziert, wo in den meisten Fällen die Abluft des Trockners mit der relativ trockenen Abluft aus einem Wirbelbett vermischt wird, was die Messung verfälschen kann. Darüber hinaus ist die relative Luftfeuchtigkeit keine sehr gute Darstellung des Prozesses, da sie mit der Temperatur variiert und erfahrungsgemäß leicht unterschiedliche Werte liefert, wenn sie an verschiedenen Stellen in dem gleichen Kanal gemessen werden.

Würde ein Messpunkt durch Produktanhaftungen blockiert werden, müsste die Anlage heruntergefahren werden. Hierbei ist zu bedenken, dass die Staubbelastung in den Anlagen teilweise so hoch ist, dass eine Sprühtrocknungsanlage unter Umständen nur für einen kurzen Zeitraum von beispielsweise zwei Tagen betrieben werden kann, und anschließend heruntergefahren und gereinigt werden muss, bevor der nächste Produktionszyklus beginnt. Bei größeren Trocknungsanlagen (Durchsatzmengen von über 30 t Trocknungsmasse pro Stunde), beispielsweise zur Trocknung von Kokosmilch, dauert es allerdings eine gewisse Zeit bis die Anlage wieder hochgefahren ist. Eine solche Anlage läuft typischerweise dreißig Tage am Stück, bevor eine Reinigung der Messpunkte notwendig wird. Würde man eine solche Anlage jeden zweiten Tag zum Reinigen herunterfahren, wären die Produktionsverluste immens. Anlagenbetreiber legen daher großen Wert darauf, möglichst lange Wartungsintervalle zu haben, um auch den Reinigungsaufwand zu reduzieren. Daher werden aus Gründen der Prozesssicherheit Messpunkte nicht zu nah am Trockenturm positioniert.

Zudem ist es präziser, die absolute Feuchte einer Gasprobe eines Prozessgases zu bestimmen. Hierzu wird eine gereinigte Gasprobe über ein Taupunktspiegelhygrometer geleitet. Das Messprinzip basiert darauf, dass die Gasprobe über eine temperaturgeregelte polierte Spiegelfläche geleitet wird. Bei einer bestimmten Temperatur - abhängig vom Feuchtigkeitsgehalt des Gases und dem Betriebsdruck - kondensiert die Feuchtigkeit in der Gasprobe auf der Oberfläche des Spiegels aus. Die Kondensation wird von optischen Systemen erfasst und die entsprechende Temperatur als Taupunkttemperatur des Messgases registriert. Die Taupunktkurve lässt den Rückschluss auf die absolute Feuchte zu. Eine wesentliche Voraussetzung für den Betrieb von Taupunktspiegelhygrometern ist es, dass die Messungen nicht durch Verunreinigungen wie Staub oder Pulverpartikel beeinflusst werden.

Zum Stand der Technik wird auf die CN 201 392 284 Y hingewiesen, die ein Verfahren und eine Vorrichtung zur Bestimmung der absoluten Feuchte einer Prozessgasprobe offenbart. Es kommt ein Taupunkthygrometer zum Einsatz. Eine Filterpatrone ragt in einen Gasstrom des Prozessgases, wobei die gereinigte Gasprobe über ein Innenrohr entnommen wird.

Die JP H09 80005 A offenbart eine Vorrichtung zur Messung der Luftfeuchtigkeit eines Windstromes für einen Hochofen. Es kommt für diesen spezifischen Anwendungsfall ein Taupunktspiegelhygrometer zum Einsatz.

In der CN 213 912 735 U wird eine Vorrichtung zur Untersuchung eines Prozessgases beschrieben. Das Prozessgas ist pulverbelastet. Die Reinigung eines Filters zur Probenentnahme erfolgt durch eine Stickstoffrückspülung einer Filterhülse.

Der Erfindung liegt die Aufgabe zugrunde, ein Verfahren zur Bestimmung der absoluten Feuchte einer Gasprobe eines Prozessgases mittels eines Taupunktspiegelhygrometers aufzuzeigen, welches geeignet ist, eine repräsentative Probe über den Gasstrom des Prozessgases zu entnehmen, um verbesserte Messwerte in kürzerer Zeit zu erhalten, insbesondere mit dem Ziel, die Prozesssteuerung im Hinblick auf den Feuchtegehalt des Prozessgases besser beeinflussen zu können.

Ferner liegt der Erfindung die Aufgabe zugrunde, eine Vorrichtung zur Durchführung des Verfahrens aufzuzeigen.

Das Verfahren gemäß Patentanspruch 1 löst den ersten Teil der Aufgabe. Eine Vorrichtung zur Durchführung des Verfahrens ist Gegenstand des Patentanspruchs 6.

Die jeweiligen Unteransprüche betreffen vorteilhafte Weiterbildungen der Erfindung.

Das erfindungsgemäße Verfahren basiert darauf, dass eine Gasprobe eines Prozessgases genommen wird. Das Prozessgas wird gefiltert und dann als gereinigte Gasprobe über ein Taupunktspiegelhygrometer geleitet. Das Besondere ist, dass das Prozessgas über ein Innenrohr entnommen wird, das sich in einer Filterpatrone befindet, wobei die Filterpatrone wiederum in den zu prüfenden Gasstrom des Prozessgases ragt. Die Filterpatrone kann in geeigneter Länge in den Gasstrom eingebracht werden, beispielsweise über ein Viertel oder die Hälfte des Querschnitts des Gasstroms. Die Filterpatrone schützt das innenliegende Innenrohr vor Verschmutzungen. Die Filterpatrone ermöglicht den Eintritt der gereinigten Gasprobe in das Innere der Filterpatrone und damit die Zuführung der Gasprobe über das Innenrohr in der Filterpatrone zu dem Taupunktspiegelhygrometer.

Die Filterpatrone ist insbesondere zylindrisch ausgebildet. Die Filterpatrone kann eine Filterfläche über ihre gesamte Mantelfläche aufweisen, zumindest aber über ihren zylindrischen Bereich. Bei der Filterpatrone handelt es sich insbesondere um einen Schlitzfilter.

Eine solche Filterpatrone kann bei Verwendung in einem Sprühtrockenverfahren relativ nah am Prozessgeschehen angeordnet werden, bevorzugt vor und nicht hinter etwaigen Abluftfiltern für das Prozessgas, sodass zuverlässigere Messwerte unabhängig von der relativ trockenen Abluft aus einem Wirbelbett der Sprühtrocknung bestimmt werden können. Ein zuverlässig bestimmter Feuchtigkeitsgehalt ermöglicht eine Reduzierung des Energieverbrauchs und trägt dazu bei, die Produktqualität zu verbessern. Es ist besonders zweckmäßig, die absolute Feuchte des Prozessgases am Auslass des Trockners zu messen. Bevorzugt wird daher die Filterpatrone in der Nähe des Auslasses des Trockners eines Sprühtrocknungsverfahrens angeordnet, da hier die unverfälschten Werte unmittelbar dargestellt werden können.

Die speziell entwickelten Filterpatronen ermöglichen es, staubfreie Gasproben auch aus hoch pulverbelasteten Zonen des Prozesses zu entnehmen. Die Gasproben werden bevorzugt über eine beheizte Leitung aus dem Innenrohr abgeleitet. Dadurch wird eine vorzeitige Kondensation verhindert, bevor die Gasprobe den Sensor des Taupunktspiegelhygrometers erreicht.

Um sicherzustellen, dass die Messungen am Taupunktspiegelhygrometer nicht durch Verunreinigungen wie Staub oder Pulverpartikel beeinflusst werden, überprüft der Sensor regelmäßig den Zustand der Spiegeloberfläche. Beim Start geht der Sensor in den sogenannten digital containment control mode (DCC). Die Oberfläche des Spiegels wird erwärmt, bis alle auf ihm vorhandenen Kondensate verdunsten. Anschließend wird die Spiegeloberfläche mit den verbleibenden Verunreinigungspartikeln als Referenz herangezogen. Dieser Vorgang kann während der Messungen in einem benutzerdefinierten Intervall wiederholt werden. So ist gewährleistet, dass permanent aktuelle Referenzwerte vorliegen und der Betreiber eine Statusmeldung erhält, wenn eine manuelle Reinigung der Spiegeloberfläche erforderlich ist.

Um eine repräsentative Gasprobe zu erhalten besitzt das Innenrohr insbesondere mehrere über ihre Länge angeordnete Öffnungen, über welche die von der Filterpatrone gefilterte Gasprobe in einen Längskanal des Innenrohrs gelangt und von dort dem Taupunktspiegelhygrometer zugeleitet wird. Die Verteilung und die Größe der Öffnungen werden so gewählt, dass aus jedem Längenbereich des Innenrohrs eine Teilgasprobe gewonnen wird und die anschließend als Mischung dem Taupunktspiegelhygrometer zugeleitet wird.

Das Besondere an der Verwendung eines Innenrohrs ist die Kombination mit einer Rückspüleinrichtung, die an das Innenrohr angeschlossen ist. Die Rückspüleinrichtung dient zum Rückspülen und leitet ein Spülgas in das Innenrohr ein, um Produktanhaftungen von einer Außenseite der Filterpatrone zu entfernen. Die Rückspüleinrichtung erfüllt eine wichtige Funktion, da die Messstelle dadurch in Bereichen mit hoher Staubbelastung, insbesondere in unmittelbarer Nähe zu einem Trockenturm, angeordnet werden kann. Hier verstopfen Messpunkte sehr schnell. Ein effizientes und regelmäßiges Rückspülen hält den Messpunkt offen, ohne die Produktion zu unterbrechen. Die erfindungsgemäße Gestaltung der Messstelle unter Verwendung einer Filterpatrone mit einem Innenrohr, das gleichzeitig auch zum Rückspülen der Filterpatrone dient, erfüllt die Anforderung in besonders günstigerweise.

Einerseits werden sehr zuverlässig Gasproben über einen relevanten Querschnitt gewonnen. Andererseits können über die Öffnungen effizient Rückspülungen der Filterpatrone vorgenommen werden.

Das Spülgas wird über die umfangseitig des Innenrohrs angeordnete Öffnungen in einen Ringspalt zwischen der Außenseite des Innenrohrs und der Innenseite der Filterpatrone geleitet. Durch einen Druckimpuls des Spülgases können Produktanhaftungen von der Außenseite der Filterpatrone regelmäßig und sehr zuverlässig gelöst werden. Anschließend kann eine weitere Gasprobe genommen werden.

Aufgrund der Abhängigkeit des Taupunktes von dem herrschenden Druck, kann die dieselbe Gasprobe mit demselben Feuchtigkeitsgehalt unter verschiedenen Druckverhältnissen bei unterschiedlichen Temperaturen kondensieren. Daher wird bei dem erfindungsgemäßen Verfahren insbesondere eine Druckkompensation durchgeführt. Hierzu wird der absolute Druck des Gases am Taupunktspiegel gemessen und als Kompensation verwendet, um zu ermitteln, dass die Probe diesen Taupunkt bei diesem absoluten Druck hat. Dadurch wird die Einwirkung des Gasansaugdrucks von der Entnahmestelle zur Messstelle kompensiert und der richtige Feuchtigkeitsgehalt wird ermittelt.

Es ist von Vorteil, wenn es einen hinreichend großen Ringspalt zwischen dem Innenrohr und der Innenseite der Filterpatrone gibt, damit das Spülgas gleichmäßig alle Bereiche der Filterpatrone erreicht und zuverlässig von Produktanhaftungen befreien kann. Zusätzlich kann vorgesehen sein, dass das Spülgas von dem Innenrohr gegen einen endseitigen Verschlusskörper der Filterpatrone geleitet wird, wobei Öffnungen in dem Innenrohr an den Verschlusskörper grenzen, sodass ein Teil des Spülgases von dem Verschlusskörper in die endseitigen Öffnungen umgelenkt wird. Die Form des Verschlusskörpers hat mithin Einfluss auf die Strömungsverhältnisse im Ringspalt. In der einfachsten Bauform ist der endseitige Verschlusskörper eine ebene Kappe, wobei die Öffnungen in dem Innenrohr die Form von kreisrunden Bohrungen haben. Wichtig in diesem Zusammenhang ist, dass der Filter über seine gesamte Länge gleichmäßig gereinigt wird. Nur so lassen sich aus dem relevanten Querschnitt des Prozessgases aussagekräftige Gasproben gewinnen.

Die Öffnungen sind in einem Öffnungsabstand zu einer Längsrichtung benachbarten Öffnung angeordnet, der an einem ersten Ende des Innenrohrs kleiner ist als an dem zweiten Ende. Das zweite Ende ist das tief in den Gasstrom ragende Ende mit dem Verschlusskörper. Das erste Ende ist das randseitige Ende an der Wand des Kanals, durch den das Prozessgas geleitet wird. Durch die Anpassung der Öffnungsabstände kann ein gleichmäßiges Ausströmen des Spülgases in den Ringspalt erreicht werden. Es ist auch möglich, die Öffnungen im Durchmesser, in der Anzahl, in der Anordnung und im Öffnungsabstand so zu wählen und anzuordnen, dass Bereiche, die erfahrungsgemäß stärker mit Stäuben belastet sind, stärker rückgespült werden, als andere Längen- oder Umfangsbereiche der Filterpatrone. Typischerweise sind die Anhaftungen am geschlossenen Ende der Filterpatrone, das am weitesten in den Medienstrom hineinragt, am größten, während die Anhaftungen zur Gehäusewandseite hin abnehmen. Die Öffnungsabstände sind daher so gewählt, dass beim Rückspülen über den Bereich, benachbart zur Gehäusewand, weniger mit Spülgas beaufschlagt wird, als der hochbelastete endseitige Bereich der Filterpatrone. Es ist sogar möglich, dass die Stirnseite des Innenrohrs komplett offen ist, um das Spülgas in großer Menge von dem offenen Ende herkommend umzulenken und auf diese Art und Weise ein Druckgefälle im Ringspalt aufzubauen, mit dem Ziel, einen hochbelasteten Umfangsbereich der Filterpatrone durch mehr Spülgas, oder durch Spülgas mit höherem Druck zu reinigen, als weniger belastete Bereiche. Idealerweise entspricht das Druckprofil im Ringspalt dem Verlauf der Beladung mit dem Produkt aus dem Prozessgas, sodass das Produkt durch eine oder mehrere Druckstöße beim Rückspülen abgespült werden kann. Die so gereinigte Filterpatrone ist umgehend wieder einsetzbar. Die Messvorgänge können fortgesetzt werden. Der Herstellungsprozess muss in keiner Weise unterbrochen werden.

Die Anpassung der Öffnungen an das gewünschte Druckprofil während des Rückspülens wirkt sich bei umgekehrter Strömungsrichtung, d.h. bei der Gewinnung der Gasprobe, ebenfalls positiv aus. Bei der Entnahme des Prozessgases zur

Feuchtebestimmung wird die gereinigte Probe durch dieselben Öffnungen in das Innere des Innenrohrs geführt, wie das Spülgas aus dem Innenrohr, sodass die Gasprobe einen repräsentativen Querschnitt des Gasstroms abbildet.

Das Innenrohr und der Filtermantel in Form eines Spaltrohrs sind insbesondere an dem endseitigen Verschlusskörper befestigt und andererseits an einer Endkappe. Die Endkappe weist eine Öffnung auf. An die Öffnung ist ein Adapterrohr angeschlossen. Das Spülgas wird über das Adapterrohr in die Öffnung der Endkappe und von dort in das gegenüberliegend der Öffnung angeordnete Innenrohr eingeleitet. Auf dem gleichen Wege wird die Gasprobe entnommen. Das Innenrohr beginnt an der Endkappe, während das Adapterrohr vom Filter weg aus der Endkappe herausgeführt wird. Das Besondere hierbei ist, dass das Innenrohr nicht an den Querschnitt des Adapterrohrs angepasst werden muss. Das Innenrohr kann auf die Prozessbedingungen des Prozesses angepasst werden, sowohl was die Anzahl, die Verteilung und die Querschnitte der Öffnungen angeht als auch hinsichtlich des Durchmessers des Innenrohrs. Das Innenrohr besitzt vorzugsweise einen gleichbleibenden Durchmesser. Die Erfindung schließt auch Innenrohre mit abgestuften Durchmessern ein. Das Innenrohr ist insbesondere zylindrisch. Es kann bei Bedarf auch unrund sein. Innenrohre mit konischer Form sind ebenfalls möglich. Maßgeblich ist die Funktion, Gasproben über verschiedene Längenabschnitte zu entnehmen und eine effektive Rückspülung zu ermöglichen.

Die Erfindung betrifft neben dem vorstehend genannten Verfahren auch eine Vorrichtung zur Durchführung des Verfahrens, wobei die Vorrichtung eine Filterpatrone umfasst, die dazu eingerichtet ist, das Prozessgas für die Gasprobe zu filtern. In der Filterpatrone befindet sich das besagte Innenrohr, das dazu ausgebildet ist, über einen Ringspalt zwischen Filterpatrone und Innenrohr die gefilterte Gasprobe aufzunehmen und zu dem Taupunktspiegelhygrometer zu leiten.

Über die besagten Öffnungen kann die Gasprobe in einen Längskanal des Innenrohrs eingeleitet werden. Gleichzeitig dient der Längskanal über eine Verbindung mit einer Rückspüleinrichtung dazu, das Spülgas in das Innenrohr zu leiten, um Anhaftungen oder Filterkuchen von einer Außenseite der Filterpatrone zu lösen. Für ein gewünschtes Druckprofil variiert der Öffnungsabstand der Öffnungen in Längsrichtung des Innenrohrs, das heißt, dass er nicht konstant gewählt ist. Der Öffnungsabstand ist an einem ersten Ende der Filterpatrone kleiner als an dem zweiten Ende der Filterpatrone.

Ein endseitiger Verschlusskörper der Filterpatrone dient nicht zur Probenentnahme, sondern ist bevorzugt gasdicht. Er dient zur Fixierung der Wände der Filterpatrone, insbesondere eines metallischen Schlitzfilters. Wichtig ist, dass in der Nähe des Verschlusskörpers eine hinreichende Menge von Spülgas austritt. Daher sollen bevorzugt endseitige Öffnungen des Innenrohrs an einen endseitigen Verschlusskörper grenzen. Endseitige Öffnungen können sowohl randseitige Öffnungen sein, die gewissermaßen radial angeordnet sind, als auch eine stirnseitige axiale Öffnung in dem Innenrohr.

An das Innenrohr wird eine Rückspülleitung angeschlossen, wobei zum Schutz des Taupunktspiegelhygrometers ein Absperrventil in einer Gasprobenleitung geschlossen ist, wenn die Rückspülleitung geöffnet ist. Der gesamte Spülvorgang wird insbesondere durch eine Steuerung für die Rückspülleitung gesteuert. Diese ist dazu ausgebildet, die Rückspüleinrichtung in Abhängigkeit von einem Auslösesignal zu starten und das Absperrventil zum Taupunktspiegelhygrometer so anzusteuern, dass das Spülgas nur in die Filterpatrone gelangt. Die Steuerung steuert insbesondere weitere Ventile an, insbesondere um das Spülgas freizugeben bzw. von der Gasprobenleitung zu trennen, wenn eine Gasprobe gemessen wird. Es ist möglich, an die Filterpatrone separate Spülleitungen anzuschließen. Das Spülen kann bei entsprechender Leitungsauslegung auch unmittelbar über die Gasprobenleitung erfolgen.

Die Erfindung wird nachfolgend anhand von in schematischen Zeichnungen dargestellten Ausführungsbeispielen näher erläutert:

### Es zeigen:

- Figur 1: eine Filterpatrone in einer Seitenansicht;
- Figur 2: die Filterpatrone der Figur 1 in Längsschnitt;
- Figur 3: eine weitere Ausführungsform einer Filterpatrone in einer perspektivischen Ansicht teilweise im Schnitt;
- Figur 4: eine schematische Darstellung eines Tiefenfilters;
- Figur 5: eine schematische Darstellung eines Oberflächenfilters;
- Figur 6: eine schematische Darstellung einer Vorrichtung zur Bestimmung der absoluten Feuchte.

Die Erfindung zeigt eine Filterpatrone 1 mit einem zylindrischen Querschnitt mit dem Durchmesser A, von z.B. 50 bis 70 mm, insbesondere 60 mm. Das in der Bildebene untere Ende ist das erste Ende 2 der Filterpatrone 1. Es ragt in einen nicht näher dargestellten Gasstrom. Das in der Bildebene obere Ende ist das zweite Ende 3. Es wird in an einer Wand eines Strömungskanals befestigt. Über ein Adapterrohr 4 ist die Filterpatrone 1 fluidleitend für ein Gas mit einem nicht näher dargestellten Taupunktspiegelhygrometer verbunden.

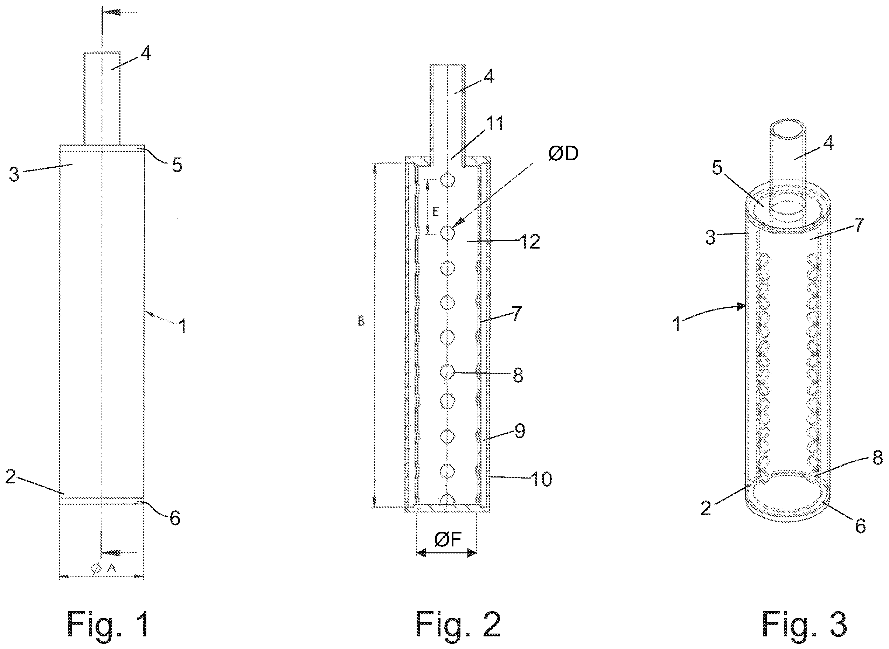

Das Adapterrohr 4 hat einen kleineren Durchmesser als die Filterpatrone 1. Das Adapterrohr 4 ist kürzer als die Filterpatrone 1. Es ist an einer kreisscheibenförmigen Endkappe 5 befestigt. Das andere, freie in den Gasstrom ragende Ende 2 weist einen ebenfalls scheibenförmigen Verschlusskörper 6 auf, so dass die Filterpatrone 1 insgesamt einen zylindrischen Querschnitt hat. Der innere Aufbau wird anhand der Figur 2 erläutert.

In der Filterpatrone 1 befindet sich ein Innenrohr 7 mit mehreren in Längsrichtung zueinander beabstandeten und über den Umfang verteilten Öffnungen 8, die in einem Öffnungsabstand E zueinander angeordnet sind. Die zylindrische Filterpatrone 1 besitzt bei diesem Ausführungsbeispiel eine Länge von 240 bis 260 mm Länge, wobei über die Länge 10 Öffnungen verteilt angeordnet sind. Der Durchmesser der Öffnungen beträgt bei diesem Ausführungsbeispiel 8 mm. Es gibt vier gerade Reihen von Öffnungen 8, die in Umfangsrichtung der Filterpatrone 1 um 90° zueinander versetzt sind. Aus der Darstellung der Figur 2 ist zu erkennen, dass der Öffnungsabstand E zwischen den beiden dargestellten Öffnungen 8 am zweiten Ende 3 größer ist am ersten Ende 2 der Filterpatrone 1.

Die Öffnungen 8 am ersten Ende 2 grenzen unmittelbar an den Verschlusskörper 6, so dass ein Gas, das in das Innenrohr 7 eingeleitet wird, unmittelbar an den Verschlusskörper 6 grenzend austreten kann. Das austretende Gas, das sogenannte Spülgas, kann in einen Ringspalt 9 eintreten. Der Ringspalt hat einen zylindrischen Querschnitt, da auch der Filtermantel 10, der die zylindrische Filterpatrone 7 umgibt, zylindrisch ist. Der Filtermantel ist mit dem Verschlusskörper 6 und der Endkappe 5 verbunden. Bei dem Filtermantel 10 handelt es sich um einen Schlitzfilter, der wie ein Tiefenfilter fungiert. Die obere Endkappe 5 ist zusätzlich über das Innenrohr 7 mit dem Verschlusskörper 6 verbunden. Das Innenrohr 7 besitzt einen Außendurchmesser F, der größer ist als der Durchmesser des Adapterrohrs 4. Eine Breite des Ringspaltes beträgt etwa 10 % des Durchmessers des Filtermantels 10. Der Filtermantel hat in einem bevorzugten Ausführungsbeispiel eine Länge von 245 mm und einen Durchmesser von 60 mm. Das Innenrohr 7 ist etwas kürzer als der Filtermantel 10, weil der Verschlusskörper 6 und die Endkappe 5 nach radial innen hin etwas abgestuft sind und daher einen kürzeren Abstand zueinander einnehmen. In der Endkappe 5 am zweiten Ende befindet sich eine Öffnung 11, in welche das Adapterrohr 4 eingesetzt ist.

Aus der perspektivischen Ansicht gemäß Figur 3 wird deutlich, dass die Öffnungen 8 jeweils 90° über den Umfang versetzt angeordnet sind und in mehreren in Längsrichtung beabstandeten Längenabschnitten angeordnet sind, wobei in jedem Längenabschnitt jeweils vier gleichmäßig über den Umfang verteilt angeordnete Öffnungen gleichen Durchmessers D angeordnet sind. Bei dem Ausführungsbeispiel der Figur 3 ist der Öffnungsabstand E aller Öffnungen in Längsrichtung identisch. Allerdings sind benachbart des zweiten Endes 3 die nächstliegenden Öffnungen 8 im größeren Abstand zur Endkappe 5 angeordnet als die Öffnungen 8 im Bereich des Verschlusskörpers 6.

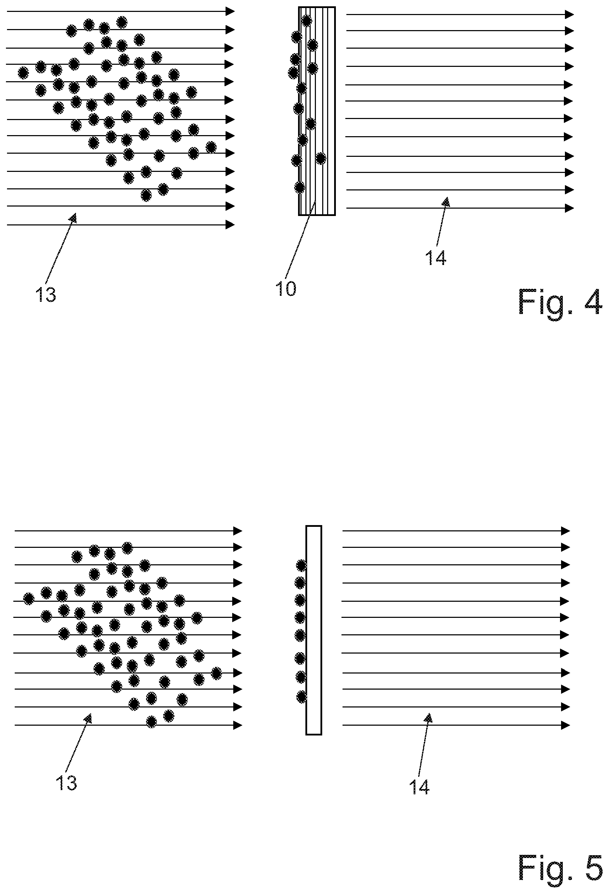

Das Innenrohr 7 erfüllt zwei Funktionen. Einerseits dient sie zur Aufnahme von gefiltertem Prozessgas, das als gereinigte Gasprobe dem Taupunktspiegelhygrometer zugeführt wird. Das gereinigte Prozessgas gelangt durch den Filtermantel 10 zunächst in den Ringspalt 9 und von dort über die Öffnungen 8 in einen zentralen Längskanal 12 des Innenrohrs 7. Die Gasprobe wird über die Öffnung 11 und das Adapterrohr 4 über eine Gasprobenleitung zu dem Taupunktspiegelhygrometer geleitet. Die Anordnung der Öffnungen und die Länge der Filterpatrone 1 ermöglicht es, eine repräsentative Gasprobe über den Querschnitt der Strömung des Prozessgases zu nehmen, dessen absolute Feuchte bestimmt werden soll. Das Prozessgas ist in der Regel mit Partikeln beladen, beispielsweise in Form eines Pulvers. Der Filtermantel 10 ist insbesondere ein Spaltfilter und als solcher ein sogenannter Tiefenfilter (Figur 4). Bei einem Tiefenfilter gelangt das mit Pulver beladene Prozessgas 13 auf den Filtermantel 10 in Form eines Spaltfilters. Auf der gegenüberliegenden Seite tritt das Prozessgas von Partikeln gereinigt aus. Es handelt sich um die gereinigte Gasprobe 14, die dem Längskanal 12 des Innenrohrs 7 zur weiteren Untersuchung zugeführt wird.

Der Trenneffekt des Tiefenfilters basiert unter anderem auf den Sperreffekt. Der Sperreffekt beruht darauf, dass Bewegungen des Massenschwerpunktes eines abzuscheidenden Partikels und zwar an einer Filterfläche vorbeiführt, wobei das Partikel aufgrund seiner geometrischen Ausdehnung dennoch auf die Filterfläche trifft und durch Adhäsion haften bleibt. Mit größer werdendem Partikeldurchmesser steigt die Wahrscheinlichkeit des Kontakts zwischen Partikel und Filterfläche. Ultrafeine Partikel werden hauptsächlich durch Diffusion abgeschieden, während bei Partikeln mit einem Durchmesser größer als 0,5 µm Sperreffekt und Trägheit dominieren. Die Abtrennung der Partikel erfolgt im Gegensatz zur Oberflächenfiltration (Figur 5) allein durch das Filtermedium. Durch Verengung der Strömungskanäle aufgrund der Partikelabscheidung verbessert sich die Abscheidewirkung bei einer gleichzeitigen Erhöhung des Druckverlustes. Die Ablagerung von Partikeln an der Oberfläche des Filtermediums in Form eines Filterkuchens ist bei der Tiefenfiltration unerwünscht, da der Zugang nachfolgender Partikel in das Filtermedium dadurch erschwert wird und es zu lokal erhöhten Druckverlusten kommen kann. Daher ist es bei der Verwendung von Schlitzfiltern besonders wichtig, die Filter regelmäßig zu reinigen bzw. eine erfindungsgemäße Rückspülung vorzunehmen. Durch anforderungsgerechte Gestaltung des Innenrohrs bzw. die Größe des Ringraums und die Anordnung der Öffnungen, können definierte Druckverhältnisse im Ringspalt 9 eingestellt werden, um Partikelanhaftungen durch ein oder mehrere Druckstöße mit Spülgas effektiv zu entfernen.

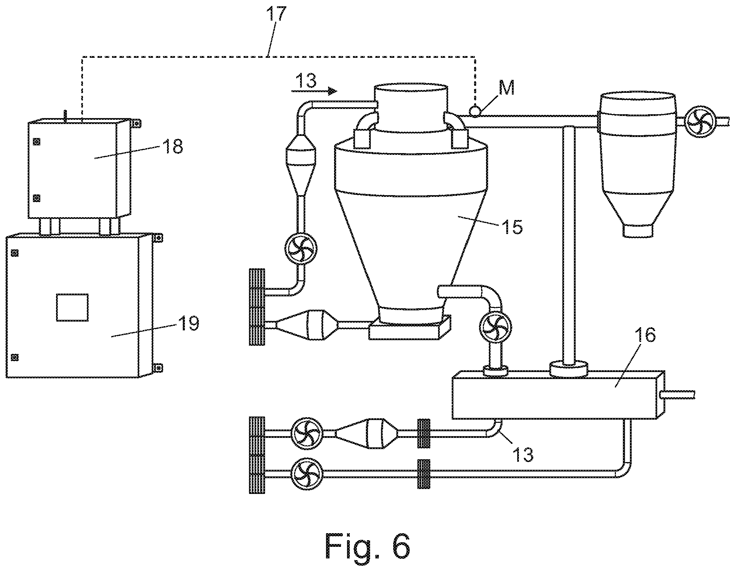

Die Figur 6 zeigt einen möglichen Anwendungsfall für eine solche Filterpatrone. Rein schematisch ist eine Sprühtrocknungsanlage dargestellt. Eine zu trocknende Flüssigkeit, beispielsweise Milchpulver, wird in einen Trocknungsturm 15 eingebracht und durch ein Prozessgas 13 in Form von heißer Luft getrocknet. Das Milchpulver wird nachfolgend in einem Wirbelbett 16 weiter getrocknet. Auch hierzu wird heiße Luft 13 als Prozessgas zugeführt. Bei der Erfindung ist vorgesehen, dass eine Messstelle M in unmittelbarer Nähe des Trocknungsturms 15 angebracht wird. Hier ist die Filterpatrone angeordnet, wie sie in den Figuren 1 bis 3 dargestellt ist. Über eine beheizte Gasprobenleitung 17 wird die Gasprobe einem rein schematisch dargestellten Taupunktspiegelhygrometer 18 zugeführt, mittels welchem die absolute Feuchte der Gasprobe 14 bestimmt wird. Der Messvorgang wird über eine Steuerung 19 gesteuert. Diese Steuerung dient auch als Rückspülung der Filterpatrone 1, indem Luft als Spülgas durch das Adapterrohr 4 in das Innenrohr 7 und über den Ringspalt 9 zur Innenseite des Filtermantels 10 geführt wird. Außenseitige Partikelanhaftungen werden dadurch von dem Filtermantel 10 gelöst und der Filtermantel gereinigt. Das Rückspülen erfolgt in Abhängigkeit von einem Auslösesignal, beispielsweise zeitgesteuert.

### Bezugszeichen:

- 1 -: Filterpatrone
- 2 -: erstes Ende von 1
- 3 -: zweites Ende von 1
- 4 -: Adapterrohr
- 5 -: Endkappe
- 6 -: Verschlusskörper
- 7 -: Innenrohr
- 8 -: Öffnung in 7
- 9 -: Ringspalt
- 10 -: Filtermantel
- 11 -: Öffnung in 5
- 12 -: Längskanal von 7
- 13 -: Prozessgas
- 14 -: Gasprobe
- 15 -: Trocknungsturm
- 16 -: Wirbelbett
- 17 -: Gasprobenleitung
- 18 -: Taupunktspiegelhygrometer
- 19 -: Steuerung

- A -: Durchmesser von 1
- B -: Länge von 10
- E -: Öffnungsabstand
- F -: Durchmesser von 7

## Patentansprüche

1. Verfahren zur Bestimmung der absoluten Feuchte einer Gasprobe eines Prozessgases, wobei das Prozessgas zur Reinigung durch einen Filter geleitet wird, bevor das Prozessgas (13) über ein Innenrohr (7) entnommen wird, das sich in einer Filterpatrone (1) befindet, wobei die Filterpatrone (1) in einen Gasstrom des Prozessgases (13) ragt, **dadurch gekennzeichnet, dass** an das Innenrohr (7) eine Rückspüleinrichtung angeschlossen ist, wobei zum Rückspülen ein Spülgas in das Innenrohr (7) eingeleitet wird, um Partikelabscheidungen von einer Außenseite der Filterpatrone (1) zu entfernen, wobei das Spülgas über umfangseitig des Innenrohrs (7) angeordnete Öffnungen (8) in einen Ringspalt (9) zwischen einer Außenseite des Innenrohrs (7) und einer Innenseite der Filterpatrone (1) geleitet wird, wobei die Öffnungen (8) in einem Öffnungsabstand (E) zu einer Längsrichtung benachbarten Öffnung (8) angeordnet sind, wobei der Öffnungsabstand (E) an einem ersten Ende (2) des Innenrohrs (7) kleiner ist als an seinem zweiten Ende (3), so dass mehr Spülgas im Bereich des ersten Endes (2) aus dem Innenrohr (7) geleitet wird, als im Bereich des zweiten Endes (3) des Innenrohres (7), wobei das erste Ende (2) tiefer in den Gasstrom des Prozessgases ragt, als das zweite Ende (3), wobei die gereinigte Gasprobe über ein Taupunktspiegelhygrometer geleitet wird.

2. Verfahren nach Anspruch 1, **dadurch gekennzeichnet, dass** das Innenrohr (7) mehrere über seine Länge angeordnete Öffnungen (8) aufweist, über welche die von der Filterpatrone (1) gefilterte Gasprobe (14) in einen Längskanal (12) des Innenrohrs (7) gelangt und von dort dem Taupunktspiegelhygrometer zugeleitet wird.

3. Verfahren nach Anspruch 1 oder 2, **dadurch gekennzeichnet, dass** Spülgas von dem Innenrohr (7) gegen einen endseitigen Verschlusskörper (6) der Filterpatrone (1) geleitet wird, wobei Öffnungen in dem Innenrohr (7) an den Verschlusskörper (6) grenzen, so dass ein Teil des Spülgases von dem Verschlusskörper (6) in die endseitigen Öffnungen (8) umgelenkt wird.

4. Verfahren nach einem der Ansprüche 1 bis 3, **dadurch gekennzeichnet, dass** beim Entnehmen des Prozessgases (13) zur Feuchtebestimmung die gereinigte Gasprobe (14) über dieselben Öffnungen (8) in das Innenrohr (7) gelangt, wie das Spülgas aus dem Innenrohr (7), so dass die Gasprobe (14) über einen repräsentativen Querschnitt des Gasstroms entnommen wird, in welchem sich die Filterpatrone (1) befindet.

5. Verfahren nach einem der Ansprüche 1 bis 4, **dadurch gekennzeichnet, dass** sich das Innenrohr (7) in einem Spaltrohr als Filtermantel (10) befindet, wobei das Innenrohr (7) und der Filtermantel (10) an dem endseitigen Verschlusskörper (6) befestigt sind und andererseits an einer Endkappe (5), wobei die Endkappe (5) eine Öffnung (11) und ein an die Öffnung (11) angeschlossenes Adapterrohr (4) aufweist, wobei das Spülgas über das Adapterrohr (4) und die Öffnung (11) in das gegenüberliegende Innenrohr (7) eingeleitet wird.

6. Vorrichtung zur Bestimmung der absoluten Feuchte, aufweisend eine Filterpatrone (1) und ein Taupunktspiegelhygrometer, welches an eine Entnahmestelle für eine gefilterte Gasprobe (14) aus einem Gasstrom eines Prozessgases (13) angeschlossen ist, wobei die Filterpatrone (1) dazu eingerichtet ist, das Prozessgas (13) zur Gewinnung einer Gasprobe (14) zu filtern, wobei sich in der Filterpatrone (1) ein Innenrohr (7) befindet, das dazu ausgebildet ist, über einen Ringspalt (9) zwischen einem Filtermantel (10) und dem Innenrohr (7) die gefilterte Gasprobe (14) aufzunehmen und zu dem Taupunktspiegelhygrometer zu leiten, wobei das Innenrohr (7) mehrere über seine Länge verteilt angeordnete Öffnungen (8) aufweist, über welche die von dem Filtermantel (10) gefilterte Gasprobe (14) in einen Längskanal (12) des Innenrohrs (7) einleitbar ist, wobei die Öffnungen (8) jeweils in einem Öffnungsabstand (E) zu einer in Längsrichtung des Innenrohrs (7) benachbarten Öffnung (8) angeordnet sind, wobei der Öffnungsabstand (E) an einem ersten Ende (2) des Innenrohrs (7) kleiner ist als an seinem zweiten Ende (3).

7. Vorrichtung nach Anspruch 6, **dadurch gekennzeichnet, dass** an das Innenrohr (7) eine Rückspüleinrichtung angeschlossen ist, die dazu ausgebildet ist, ein Spülgas in das Innenrohr (7) zu leiten, um Partikelabscheidungen von einer Außenseite der Filterpatrone (1) zu entfernen.

8. Vorrichtung nach Anspruch 6 oder 7, **dadurch gekennzeichnet, dass** an dem ersten Ende (2) benachbarte Öffnungen (8) des Innenrohrs (7) an einen endseitigen Verschlusskörper (6) der Filterpatrone (1) grenzen.

9. Vorrichtung nach einem Ansprüche 6 bis 8, **dadurch gekennzeichnet, dass** an das Innenrohr (7) eine Rückspülleitung angeschlossen ist, wobei zum Schutz des Taupunktspiegelhygrometers ein Absperrventil in der Gasprobenleitung geschlossen ist, wenn die Rückspülleitung geöffnet ist.

10. Vorrichtung nach Anspruch 9, **dadurch gekennzeichnet, dass** eine Steuerung (19) für die Rückspüleinrichtung dazu ausgebildet ist, die Rückspüleinrichtung in Abhängigkeit von einem Auslösesignal zu starten und das Absperrventil so anzusteuern, dass nur die Filterpatrone (1) gespült wird.

## Claims

1. A method for determining the absolute humidity of a gas sample of a process gas, wherein the process gas is passed through a filter for cleaning before the process gas (13) is withdrawn via an inner tube (7), located in a filter cartridge (1), wherein the filter cartridge (1) projects into a gas stream of the process gas (13), **characterized in that** a backwash apparatus is connected to the inner tube (7), wherein a purge gas is introduced into the inner tube (7) for backwashing in order to remove particle deposits from an outer side of the filter cartridge (1), wherein the purge gas is guided via openings (8) arranged on the circumference of the inner tube (7) into an annular gap (9) between an outer side of the inner tube (7) and an inner side of the filter cartridge (1), wherein the openings (8) are arranged at an opening distance (E) from a longitudinally adjacent opening (8), wherein the opening distance (E) is smaller at a first end (2) of the inner tube (7) than at its second end (3), such that more purge gas is passed out of the inner tube (7) in the region of the first end (2) than in the region of the second end (3) of the inner tube (7), wherein the first end (2) protrudes deeper into the gas flow of the process gas than the second end (3), wherein the purified gas sample is passed over a dew point mirror hygrometer.

2. The method according to claim 1, **characterized in that** the inner tube (7) has a plurality of openings (8) arranged along its length, through which the gas sample (14) filtered by the filter cartridge (1) passes into a longitudinal channel (12) of the inner tube (7) and from there is fed to the dew point mirror hygrometer.

3. The method according to claim 1 or 2, **characterized in that** purge gas is directed from the inner tube (7) against an end-side closure body (6) of the filter cartridge (1), wherein openings in the inner tube (7) border on the closure body (6), such that a part of the purge gas is deflected from the closure body (6) into the end-side openings (8).

4. The method according to any one of claims 1 to 3, **characterized in that**, when the process gas (13) is taken for the moisture determination, the purified gas sample (14) enters the inner tube (7) via the same openings (8) as the purge gas from the inner tube (7), such that the gas sample (14) is taken over a representative crosssection of the gas flow in which the filter cartridge (1) is located.

5. The method according to any one of claims 1 to 4, **characterized in that** the inner tube (7) is located in a split tube as a filter casing (10), wherein the inner tube (7) and the filter casing (10) are fastened to the end-side closure body (6) and on the other hand to an end cap (5), wherein the end cap (5) has an opening (11) and an adapter tube (4) connected to the opening (11), wherein the purge gas is introduced via the adapter tube (4) and the opening (11) into the opposite inner tube (7).

6. A device for determining absolute humidity, having a filter cartridge (1) and a dew point mirror hygrometer, which is connected to a sampling point for a filtered gas sample (14) from a gas stream of a process gas (13), wherein the filter cartridge (1) is configured to filter the process gas (13) to obtain a gas sample (14), wherein an inner tube (7) is located in the filter cartridge (1) which is configured to receive the filtered gas sample (14) via an annular gap (9) between a filter casing (10) and the inner tube (7) and to guide it to the dew point mirror hygrometer, wherein the inner tube (7) has a plurality of openings (8) distributed over its length, through which the gas sample (14) filtered by the filter casing (10) can be introduced into a longitudinal channel (12) of the inner tube (7), wherein the openings (8) are each arranged at an opening distance (E) from an opening (8) adjacent in the longitudinal direction of the inner tube (7), wherein the opening distance (E) is smaller at a first end (2) of the inner tube (7) than at its second end (3).

7. The device according to claim 6, **characterized in that** a backwash apparatus is connected to the inner tube (7), which is configured to guide a purge gas into the inner tube (7) in order to remove particle deposits from an outer side of the filter cartridge (1).

8. The device according to claim 6 or 7, **characterized in that** at the first end (2) adjacent openings (8) of the inner tube (7) border on an end closure body (6) of the filter cartridge (1).

9. The device according to any one of claims 6 to 8, **characterized in that** a backwash line is connected to the inner tube (7), wherein to protect the dew point mirror hygrometer a shut-off valve in the gas sample line is closed when the backwash line is open.

10. The device according to claim 9, **characterized in that** a control (19) for the backwash apparatus is configured to start the backwash apparatus in response to a trigger signal and to control the shut-off valve in such a way that only the filter cartridge (1) is purged.

## Revendications

1. Procédé de détermination de l'humidité absolue d'un échantillon de gaz d'un gaz de traitement, dans lequel le gaz de traitement est acheminé à travers un filtre pour être nettoyé avant que le gaz (13) de traitement ne soit prélevé par un tube intérieur (7) qui se trouve dans une cartouche filtrante (1), dans lequel la cartouche filtrante (1) fait saillie dans un flux de gaz du gaz (13) de traitement, **caractérisé en ce qu'**un système de rétrolavage est raccordé au tube intérieur (7), dans lequel pour le rétrolavage un gaz de lavage est introduit dans le tube intérieur (7) pour éliminer les dépôts de particules d'un côté extérieur de la cartouche filtrante (1), dans lequel le gaz de lavage est acheminé par des ouvertures (8) disposées côté circonférence du tube intérieur (7) dans une fente annulaire (9) entre un côté extérieur du tube intérieur (7) et un côté intérieur de la cartouche filtrante (1), dans lequel les ouvertures (8) sont disposées à une distance (E) d'ouverture par rapport à une ouverture (8) adjacente direction longitudinale, dans lequel la distance (E) d'ouverture à une première extrémité (2) du tube intérieur (7) est plus petite qu'à sa deuxième extrémité (3), de sorte qu'une plus grande quantité de gaz de lavage est acheminée hors du tube intérieur (7) dans la région de la première extrémité (2) que dans la région de la deuxième extrémité (3) du tube intérieur (7), dans lequel la première extrémité (2) dépasse plus profondément dans le flux de gaz du gaz de traitement que la deuxième extrémité (3), dans lequel l'échantillon de gaz nettoyé est acheminé via un hygromètre à miroir refroidi.

2. Procédé selon la revendication 1, **caractérisé en ce que** le tube intérieur (7) présente plusieurs ouvertures (8) disposées sur sa longueur, par lesquelles l'échantillon de gaz (14) filtré par la cartouche filtrante (1) parvient dans un canal longitudinal (12) du tube intérieur (7) et est acheminé de là vers l'hygromètre à miroir refroidi.

3. Procédé selon la revendication 1 ou la revendication 2, **caractérisé en ce que** le gaz de lavage est dirigé à partir du tube intérieur (7) contre un corps d'obturation (6) côté extrémité de la cartouche filtrante (1), dans lequel des ouvertures dans le tube intérieur (7) sont adjacentes au corps d'obturation (6) de sorte qu'une partie du gaz de lavage est déviée par le corps d'obturation (6) dans les ouvertures (8) côté extrémité.

4. Procédé selon l'une quelconque des revendications 1 à 3, **caractérisé en ce que** lors du prélèvement du gaz (13) de traitement pour la détermination de l'humidité, l'échantillon de gaz (14) nettoyé parvient dans le tube intérieur (7) par les mêmes ouvertures (8) que le gaz de lavage du tube intérieur (7), de sorte que l'échantillon de gaz (14) est prélevé sur une section représentative du flux de gaz dans lequel se trouve la cartouche filtrante (1).

5. Procédé selon l'une quelconque des revendications 1 à 4, **caractérisé en ce que** le tube intérieur (7) se trouve dans une chemise d'entrefer en tant que chemise filtrante (10), dans lequel le tube intérieur (7) et la chemise filtrante (10) sont fixés au corps d'obturation (6) côté extrémité et d'autre part à un capuchon d'extrémité (5), dans lequel le capuchon d'extrémité (5) présente une ouverture (11) et un tube adaptateur (4) raccordé à l'ouverture (11), dans lequel le gaz de lavage est introduit dans le tube intérieur (7) opposé par le tube adaptateur (4) et l'ouverture (11).

6. Dispositif de détermination de l'humidité absolue, présentant une cartouche filtrante (1) et un hygromètre à miroir refroidi, lequel est raccordé à un point de prélèvement pour un échantillon de gaz (14) filtré à partir d'un flux gazeux d'un gaz (13) de traitement, dans lequel la cartouche filtrante (1) est configurée pour filtrer le gaz (13) de traitement pour l'obtention d'un échantillon de gaz (14), dans lequel un tube intérieur (7), qui est réalisé pour recevoir l'échantillon de gaz (14) filtré et l'acheminer vers l'hygromètre à miroir refroidi par une fente annulaire (9) entre une chemise filtrante (10) et le tube intérieur (7), se trouve dans la cartouche filtrante (1), dans lequel le tube intérieur (7) présente plusieurs ouvertures (8) réparties sur sa longueur par lesquelles l'échantillon de gaz (14) filtré par la chemise filtrante (10) peut être introduit dans un canal longitudinal (12) du tube intérieur (7), dans lequel les ouvertures (8) sont respectivement disposées à une distance (E) d'ouverture par rapport à une ouverture (8) adjacente dans la direction longitudinale du tube intérieur (7), dans lequel la distance (E) d'ouverture à une première extrémité (2) du tube intérieur (7) est plus petite qu'à sa deuxième extrémité (3).

7. Dispositif selon la revendication 6, **caractérisé en ce qu'**un système de rétrolavage, qui est réalisé pour acheminer un gaz de lavage dans le tube intérieur (7) afin d'éliminer des dépôts de particules d'un côté extérieur de la cartouche filtrante (1), est raccordé au tube intérieur (7).

8. Dispositif selon la revendication 6 ou la revendication 7, **caractérisé en ce que** des ouvertures (8) du tube intérieur (7) voisines au niveau de la première extrémité (2) sont adjacentes à un corps d'obturation (6) côté extrémité de la cartouche filtrante (1).

9. Dispositif selon l'une quelconque des revendications 6 à 8, **caractérisé en ce qu'**une conduite de rétrolavage est raccordée au tube intérieur (7), dans lequel, pour protéger l'hygromètre à miroir refroidi, une vanne d'arrêt est fermée dans la conduite d'échantillonnage de gaz lorsque la conduite de rétrolavage est ouverte.

10. Dispositif selon la revendication 9, **caractérisé en ce qu'**une commande (19) pour le système de rétrolavage est réalisée pour démarrer le système de rétrolavage en fonction d'un signal de déclenchement et pour commander la vanne d'arrêt de sorte que seule la cartouche filtrante (1) soit rincée.
